# EUROPEAN PATENT APPLICATION

(11) **EP 3 575 420 A1**
(43) Date of publication of application: **04.12.2019**
(21) Application number: 17893965.8
(22) Date of filing: 30.01.2017
(51) Int. Cl.: C22B 30/06, C22B 3/08, C22B 3/44, C22B 7/00, C25C 1/22

(54) **BISMUTH PURIFICATION METHOD**

(71) Applicant: Sumitomo Metal Mining Co., Ltd., Tokyo 105-8716 (JP)
(72) Inventor: TAKENOUCHI Hiroshi, Niihama-shi Ehime 792-0002 (JP); KAJI Nobuyuki, Niihama-shi Ehime 792-0002 (JP); NAGAKURA Toshihiko, Niihama-shi Ehime 792-0002 (JP); TAKEDA Kenji, Niihama-shi Ehime 792-0002 (JP); ASANO Satoshi, Niihama-shi Ehime 792-0002 (JP)
(74) Representative: Jones, Nicholas Andrew
(86) International application number: PCT/JP2017/003210
(87) International publication number: WO 2018/138917

(57) **Abstract**

A method for refining bismuth is provided, which comprises recovering bismuth from a solution obtained after recovery of noble metals from a copper electrolytic slime.
The method comprises:
1) a neutralization step of adding alkali to an acid solution to adjust the pH to the range of 2.0 or more and 3.0 or less, and then performing solid-liquid separation to obtain a neutralized filtrate and a neutralized precipitate;
2) an alkaline leaching step of adding alkali to the neutralized precipitate obtained in the neutralization step to separate the resultant into an alkali leachate and an alkaline leaching residue;
3) a sulfuric acid leaching step of adding sulfuric acid to the alkaline leaching residue to separate the resultant into a sulfuric acid leachate and a sulfuric acid-leaching residue;
4) a cooling step of cooling the sulfuric acid leachate obtained in the sulfuric acid leaching step to obtain crystals of bismuth sulfate;
5) a bismuth oxidation step of adding alkali to the crystals of bismuth sulfate obtained in the cooling step to obtain bismuth oxide; and
6) an electrolysis step of adding an acid solution to the bismuth oxide obtained in the bismuth oxidation step for dissolution and then electrowinning the thus obtained solution to obtain metal bismuth.

## Description

### Technical Field

The present invention relates to a method for refining bismuth. More specifically, the present invention relates to a refining method, which comprises recovering valuable metal, bismuth, from a copper electrolytic slime generated in a copper electrorefining step.

### Background Art

As a method for recovering copper from copper-containing ores, a method for obtaining high-purity electrolytic copper has been generally employed, which comprises subjecting copper-containing ores to a mineral processing step to concentrate copper and to obtain a copper concentrate, next, subjecting the copper concentrate to pyrometallurgical smelting to obtain blister copper, wherein the copper concentrate is introduced into a furnace and then melted at high temperatures, next, immersing the blister copper as an anode in a sulfuric acid solution, applying an electrical current between the anode and a cathode such as a stainless steel or copper plate that is immersed facing the anode, performing electrolytic refining, wherein copper dissolved from the anode is selectively electrodeposited on the cathode, and thus obtaining high-purity electrolytic copper.

The above copper-containing ores often contain, in addition to target copper, noble metals such as gold and silver and various components that are valuables and impurities, such as bismuth, arsenic, antimony, selenium, lead, iron, and tellurium. These components are separated from copper through the above pyrometallurgical smelting, by which they are separated as slags, or through electrolytic refining, by which they are deposited as a copper electrolytic slime on the electrolytic cell bottom together with noble metals, for example.

Since the above copper electrolytic slime contains various components as described above, a process for refining such a slime to recover target valuables is required.

Several methods for refining slimes are known and one of these methods involves performing a copper removal step, by which sulfuric acid is added to a copper electrolytic slime, and then copper contained in the copper electrolytic slime is dissolved and removed, next introducing the decopperized slime, from which copper has been removed, into a furnace and then heating the same to a high temperature, volatilizing and separating antimony and selenium, then oxidizing the resultant to separate lead as an oxide, and then separating noble metals from bismuth.

The above method is appropriate for handling a large quantity of materials, however, it is problematic in that it requires large-scale facilities, a high energy cost for processing, and a high interest rate in process, since noble metals can be recovered only in the latter half of the steps.

Hence, in recent years, novel treatment processes mainly composed of a wet method have been widely applied practically. These wet treatment processes are divided broadly into the following two methods depending on the employment of a wet reduction method or a roasting method for selenium separation.

A first method is described in Non-Patent Literature 1, Patent Literature 1, or Patent Literature 2.

These methods involve adding sulfuric acid and oxygen to a copper electrolytic slime and then leaching part of tellurium and copper under high temperature and high pressure. Next, hydrochloric acid and hydrogen peroxide or chlorine are added to the thus obtained residue as a result of leaching, thereby leaching gold, elements of the platinum group, selenium, and tellurium.

Next, the leachate is mixed with an organic extracting agent, bis(2-butoxyethyl)ether (hereinafter, denoted as DBC), so as to extract gold in the extracting agent, and then the raffinate is reduced with sulfur dioxide, and thus selenium, tellurium, and elements of the platinum group are recovered. The mixture of selenium, tellurium, and elements of the platinum group is distilled as they are in the form of metal, and thus is separated into selenium and tellurium and elements of the platinum group. A chlorine leaching residue is treated with aqueous ammonia to leach silver, and then silver is recovered in the form of powder from the leachate.

A second method is described in Non-Patent Literature 2. Specifically, this method is the same as the above first method in terms of the step of subjecting a copper electrolytic slime to pressure leaching with sulfuric acid, to perform copper removal and tellurium removal, but differs from the first method in that the residue is then mixed with sulfuric acid, roasted to volatilize and separate selenium, and at the same time, silver in the residue is converted to silver sulfate. The sulfuric acid roasting residue is firstly subjected to silver leaching using a calcium nitrate aqueous solution, the leachate is electrolyzed, and thus silver metal is recovered.

The residue from which silver has been leached is subjected to leaching of gold, platinum group, selenium, and remaining tellurium with the use of hydrochloric acid and chlorine. The leachate is mixed with DBC to extract gold, but the principle is the same as that of the first method. Furthermore, the raffinate is subjected to hydrazine reduction, so that elements of the platinum group and tellurium are recovered as metal powder.

Note that as a method for recovering silver from a sulfuric acid roasting residue in the above second method, a method using ammonia and a method using sodium sulfite are also proposed as in the case of the above first method.

Accordingly, the above two methods are not described as involving recovery of bismuth, for example, by a wet step, as a method for separating several valuables and impurities. Regarding bismuth, a general method for recovering bismuth involves melting with a conventional dry step, and then recovering bismuth from a slag. However, the methods are not preferred since the methods are problematic in increased investment for providing a furnace to realize a dry step, increased investment for energy to be consumed, increased costs, and the like.

### Citation List

### Patent Literature

Patent Literature 1: Japanese Unexamined Patent Publication No. H09-316559
Patent Literature 2: Japanese Unexamined Patent Publication No. H09-316561

### Non-Patent Literature

Non-Patent Literature 1: K. E. Sutliff et al, JOM, August (1996), pp42-44, J. E. Hoffmann et al, Proceedings of COPPER 95-COBRE 95 International Conference Volume III (1995), The Metallurgical Society of CIM, pp41-57
Non-Patent Literature 2: J. E. Hoffmann et al, HY DROMETALLURGY' 94, the Institution of Mining and Metallurgy and the Society of Chemical Industry, CHAPMAN & HALL (1994), pp69-105

### Summary of Invention

### Technical Problem

An object of the present invention is to provide a method for efficiently recovering and refining bismuth from a solution obtained after recovery of noble metals from a copper electrolytic slime using mainly a wet step without using a furnace or the like as far as possible.

### Solution to Problem

A first invention is a method for refining bismuth, comprising, in steps of smelting minerals containing copper, noble metals, bismuth and an impurity to obtain blister copper, subjecting the blister copper to electrolytic refining to recover copper, performing electrolytic refining to generate an electrolytic slime, and then recovering noble metals by a wet method from the electrolytic slime,
subjecting an acid solution generated after recovery of the noble metals to the following steps:
1) a neutralization step of adding alkali to the above acid solution to adjust the pH to a range of 2.0 or more and 3.0 or less, and then performing solid-liquid separation to obtain a neutralized filtrate and a neutralized precipitate;
2) an alkaline leaching step of adding alkali to the above neutralized precipitate to separate the resultant into an alkali leachate and an alkaline leaching residue;
3) a sulfuric acid leaching step of adding sulfuric acid to the above alkaline leaching residue to separate the resultant into a sulfuric acid leachate and a sulfuric acid-leaching residue;
4) a cooling step of cooling the above sulfuric acid leachate to obtain crystals of bismuth sulfate;
5) a bismuth oxidation step of adding alkali to the above crystals of bismuth sulfate to obtain bismuth oxide; and
6) an electrolysis step of adding an acid solution to the above bismuth oxide for dissolution, and then electrowinning the thus obtained solution to obtain metal bismuth.

A second invention is a method for refining bismuth, wherein, in the first invention, the above impurity is one or more types of copper, iron, lead, arsenic, and tellurium.

A third invention is a method for refining bismuth, comprising, in the first invention, heating the alkali leachate obtained in the above alkaline leaching step at 90°C or higher, and then cooling the same to obtain crystals containing arsenic.

A fourth invention is a method for refining bismuth, wherein, in the first invention, the above sulfuric acid leaching step comprises two-stage leaching process of: first contacting with low-concentration sulfuric acid to leach a leaching residue, so as to separate the resultant into a primary leachate and a primary leaching residue; and then contacting the primary leaching residue with high-concentration sulfuric acid, so as to separate the resultant into a secondary leachate and a secondary leaching residue, and then feeding the thus obtained secondary leachate to the cooling step of the above first invention.

A fifth invention is a method for refining bismuth, wherein the acid solution to be used in the above electrolysis step in the first invention is a solution containing hydrosilicofluoric acid.

A sixth invention is a method for refining bismuth, comprising, in the alkaline leaching step in the first invention, using a sodium hydroxide solution with a concentration of 1 mol/l or more and 5 mol/l or less as alkali to be added to the neutralized precipitate, mixing the mixture for dissolution in such a manner that the slurry concentration is 10 g/l or more and 100 g/l or less, and thus obtaining an alkali leachate and an alkaline leaching residue.

A seventh invention is a method for refining bismuth, comprising, in the sulfuric acid leaching step in the first invention, adjusting the pH of the slurry after addition of sulfuric acid to a range of 0 or more and 3.5 or less, leaching, performing solid-liquid separation after leaching, and thus obtaining a sulfuric acid leachate and a sulfuric acid-leaching residue.

### Advantageous Effects of Invention

According to the first invention, in the neutralization step, the pH ranges from 2 to 3, so that impurities can be separated in the form of hydroxide, bismuth concentration can be maximized, and separation by solid-liquid separation into a bismuth-containing neutralized precipitate and a neutralized filtrate is possible. In the alkaline leaching step, separation into an alkaline leaching residue in which bismuth remains and an alkali leachate is possible. In the sulfuric acid leaching step, separation into a bismuth-containing sulfuric acid leachate and a sulfuric acid-leaching residue is possible. In the cooling step, crystals of bismuth sulfate can be obtained, and in the bismuth oxidation step, bismuth oxide can be obtained. In the electrolysis step, a solution prepared by adding an acid solution to bismuth oxide is subjected to electrowinning, and then finally electrodeposited metal bismuth can be obtained.

As described above, according to the present invention, high-purity metal bismuth can be recovered by a wet step from copper smelting, and low-cost operation can be performed since the wet step requires no large-scale facilities unlike dry steps.

According to the second invention, impurities of one or more types of copper, iron, lead, arsenic, and tellurium differ from bismuth in terms of behavior to some extent during neutralization, electrolytic refining, and the like. The use of the present invention enables to perform efficient separation using the method of the present invention and to concentrate bismuth as a result of such efficient separation, and does not interfere with bismuth recovery.

According to the third invention, an alkali leachate is heated at 90°C or higher, and then cooled to obtain crystals containing arsenic, so that arsenic can be selectively separated to facilitate the recycling of arsenic.

According to the fourth invention, when a two-stage process is performed, wherein primary treatment using low-concentration sulfuric acid is performed, and then secondary treatment using high-concentration sulfuric acid is performed, the solubility of bismuth is increased to facilitate the concentrating of bismuth.

According to the fifth invention, because of the use of an electrolytic solution containing bismuth silicofluoride, high-purity metal bismuth, from which impurities have been sufficiently removed, can be obtained.

According to the alkali concentration and the slurry concentration of the sixth invention, a separation rate upon separation of arsenic can be improved, and efficiency can be improved, such that filterability upon solid-liquid separation can be prevented from decreasing.

According to the seventh invention, electrowinning can lower the loss of bismuth such that no bismuth is recovered.

### Brief Description of Drawings

Fig. 1 shows steps of the method for refining bismuth according to the present invention.
Fig. 2 is an illustration of products obtained by each step of the method for refining bismuth in Fig. 1.

### Description of Embodiments

The method for refining bismuth using a wet method according to the present invention is as described below.

The present invention comprises, in steps of smelting minerals containing copper, noble metals, bismuth and an impurity to obtain blister copper, subjecting the blister copper to electrolytic refining to recover copper, performing electrolytic refining to generate an electrolytic slime, and then recovering noble metals by a wet method from the electrolytic slime,
subjecting an acid solution generated after recovery of the noble metals to the following steps.

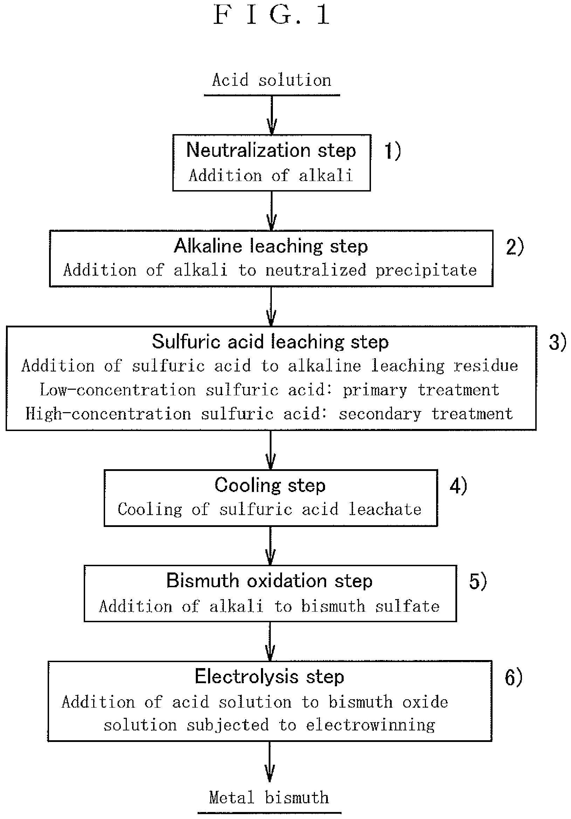

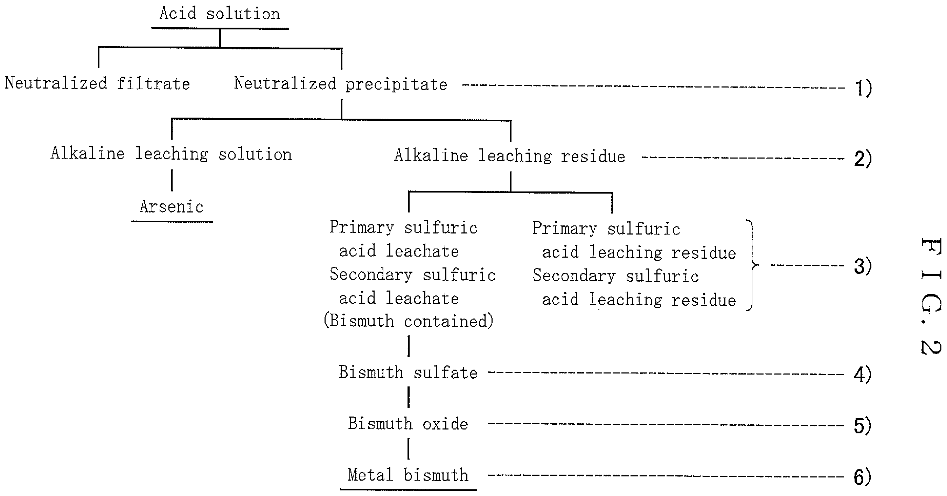

Fig. 1 shows each step of refining bismuth, and Fig. 2 is an illustration of products obtained by each step shown in Fig. 1. The following numbers 1) to 6) correspond to 1) to 6) in the Figures.

### 1) Neutralization step

Alkali is added to the above acid solution generated after recovery of noble metals, the pH is adjusted to a range of 2.0 or more and 3.0 or less, and then solid-liquid separation is performed to obtain a neutralized filtrate and a neutralized precipitate.

### 2) Alkaline leaching step

Alkali is added to the neutralized precipitate obtained in the above neutralization step to separate the resultant into an alkali leachate and an alkaline leaching residue.

### 3) Sulfuric acid leaching step

Sulfuric acid is added to the alkaline leaching residue obtained in the above alkaline leaching step to separate the resultant into a sulfuric acid leachate and a sulfuric acid-leaching residue.

### 4) Cooling step

The sulfuric acid leachate obtained in the above sulfuric acid leaching step is cooled to obtain crystals of bismuth sulfate.

### 5) Bismuth oxidation step

Alkali is added to the crystals of bismuth sulfate obtained in the above cooling step to obtain bismuth oxide.

### 6) Electrolysis step

An acid solution is added to the bismuth oxide obtained in the above bismuth oxidation step for dissolution, and then the thus obtained solution is subjected to electrowinning to obtain metal bismuth.

In minerals to which the present invention is applied, examples of impurities include one or more types of iron, lead, arsenic, and tellurium. These impurities differ from bismuth in terms of behavior to some extent during neutralization, electrolytic refining, and the like. Hence, the use of the methods of the present invention enables to perform efficient separation and to concentrate bismuth as a result of such efficient separation, and does not interfere with bismuth recovery. On the other hand, if impurities other than the above examples, such as antimony, are contained at high concentrations, such impurities have behavior similar to that of bismuth, causing a difficulty in efficient concentration.

Hereinafter, each step of the present invention will be described in detail.

### 1) Neutralization step

Alkali is added to an acid solution after recovery of noble metals by the above wet method from an electrolytic slime to neutralize the acid solution.

After neutralization treatment, a neutralized filtrate and a neutralized precipitate can be separated from each other by finely adjusting pH; that is, the neutralized precipitate such as hydroxide, which is formed in accordance with each element based on the relationship between solubility product and pH, and the neutralized filtrate, which is continuously dissolved without forming such a precipitate.

In the alkaline leaching step and the sulfuric acid leaching step that are downstream steps of the present invention, it is difficult to effectively separate antimony and iron contained as impurities from bismuth. Hence, it is important to sufficiently separate in advance antimony and iron in the neutralization step.

In the neutralization step, an acid solution containing, in addition to copper, noble metals, and bismuth, impurities such as iron, lead, arsenic, tellurium, antimony, and nickel ion is first adjusted using alkali to have a pH ranging from 2.0 to 3.0, followed by solid-liquid separation into a neutralized filtrate and a neutralized precipitate. A pH of less than 2.0 results in weak efficiency of separating bismuth and a pH of higher than 3.0 causes copper, antimony, arsenic, nickel and the like to start to precipitate simultaneously with bismuth, lowering the grade of the thus obtained bismuth. Hence, such pHs are not preferred. With the pH ranging from 2.0 to 3.0, only high-concentration bismuth can be separated.

Separation of impurities such as iron and antimony in the form of hydroxide is optimum in terms of handling. Regulation of the pH to a range of 2.0 or more and 3.0 or less, desirably 2.4 or more and 2.8 or less, can maximize the concentration of bismuth.

For solid-liquid separation, known means such as Nutsche and filtering flask, a centrifugal separator, a filter press, Denver filter, and the like can be used, and thus separation into a neutralized filtrate and a neutralized precipitate is possible.

### 2) Alkaline leaching step

There are elements that are dissolved on both acid side and alkali side. In the present invention, alkali is added to separate the resultant into an alkali leachate and an alkaline leaching residue. When alkali is added to a neutralized precipitate, a phenomenon takes place in which elements that are dissolved even in alkali, as in the case of an amphoteric compound such as arsenic, are dissolved, so that separation into an alkali leachate and an alkaline leaching residue is possible.

In view of examination of leaching with the use of sulfuric acid in downstream steps, the proportions of iron, lead, and arsenic to be generated in the above neutralization step and then distributed into a residue should each be suppressed to 50% or less.

As alkali to be added, slaked lime or sodium hydroxide can be used. Methods for adding alkali that can be used herein include a method that involves mixing slaked lime with water to prepare a lime slurry, or involves dissolving sodium hydroxide in water to prepare a solution, and then adding the slurry or the solution using a metering pump. When slaked lime is used, calcium sulfate (gypsum) can be generated as an impurity with respect to bismuth to be recovered. Hence, sodium hydroxide, the product of which after neutralization is water-soluble, is preferably used.

In an example of the alkaline leaching step, arsenic contained in a neutralized precipitate is leached into an alkali leachate using sodium hydroxide. The thus leached arsenic can be separated by heating the alkali leachate at 90°C or higher, cooling, and then subjecting the resultant to a boiling step for obtaining arsenic-containing crystals. Specifically, arsenic is selectively separated using the fact that an arsenic crystal structure is changed at high temperatures. Through the boiling step, an advantage of facilitating the recycling of arsenic can be obtained.

To remove arsenic in a larger amount, a sodium hydroxide solution may be added to the above neutralized precipitate to prepare a slurry and then the slurry is used for reaction. The concentration of sodium hydroxide and the concentration of the slurry at the start of reaction may be adjusted depending on the quantity of arsenic contained in the neutralized precipitate.

Specifically, a sodium hydroxide solution with a concentration of 1 to 5 mol/l is preferably used and added in such a manner that the slurry concentration ranges from 10 to 100 g/l. In addition, the concentration of sodium hydroxide is further desired to be around 2 mol/l.

The reaction temperature is appropriately around 60°C, and a reaction temperature lower than this temperature leads to a slow reaction. On the other hand, a reaction temperature of higher than 60°C is not preferred, since the resulting reaction is not excessively accelerated and an even higher energy cost is required, for example.

A concentration of sodium hydroxide of less than 1 mol/l is inconvenient, such that arsenic is not sufficiently removed and the part thereof remains in the neutralized precipitate, for example.

Moreover, when the concentration of sodium hydroxide is excessively high, such as higher than 5 mol/l, impurities other than arsenic, such as antimony and iron are also leached. This case offers an advantage of the increased purity of bismuth remaining in the alkaline leaching residue, but is problematic in that the increased amount of sodium hydroxide to be used results in an increased cost, and furthermore even part of bismuth is leached into the alkali leachate, so as to increase the loss. Hence, this is not preferred.

A slurry concentration of less than 10 g/l causes an inconvenience such that the equivalent amount of a neutralized precipitate relative to an alkali solution is too low, and thus the quantity of bismuth to be dissolved and the loss are increased relatively, for example. A slurry concentration of higher than 100 g/l causes an inconvenience such that, since the equivalent amount of a neutralized precipitate relative to an alkali solution is excessively high, arsenic cannot be sufficiently dissolved and removed, and thus an effect of removing arsenic is lowered, for example. In contrast, when the slurry concentration is 10 g/l or more and 100g/l or less, an advantage can be obtained, such that the loss of bismuth can be suppressed and arsenic can be efficiently removed.

Furthermore, for example, when the above neutralized precipitate contains raw materials and chloride (Cl) ion derived from the treatment step, bismuth is present as a compound such as oxychlorobismuth (BiClO), having high solubility to sulfuric acid, and can inhibit the deposition of bismuth sulfate in the cooling step described later. However, the use of alkaline leaching of the present invention can suppress the grade of chloride ion in the alkaline leaching residue at 0.1% or lower, and as a result, can also have an effect of reducing the loss of bismuth in the cooling step described later.

When the concentration of arsenic in an alkali leachate is excessively high, crystals of sodium dihydrogen arsenate may be generated in the leachate, filterability may become worse with the generation, and the load of washing to be performed to dissolve and remove the thus generated crystals is increased, for example. Hence, such concentration of arsenic is not preferred.

Note that leaching is performed so that the molar ratio of arsenic to bismuth (As/Bi) in a residue obtained in the alkaline leaching step is 0.1 or less. Leaching is performed to meet the molar ratio, so that 90% or more of bismuth can be recovered in the sulfuric acid leaching step described later.

### 3) Sulfuric acid leaching step

Sulfuric acid is added to the alkaline leaching residue obtained in the above alkaline leaching step, and then separation into a sulfuric acid leachate and a sulfuric acid-leaching residue is performed using the fact that solubility differs depending on the concentration of sulfuric acid.

Note that when chloride ions are contained as described above, a washing step (pH adjusting step) for washing an alkaline leaching residue with water may be provided between the above alkaline leaching step and sulfuric acid leaching step, so as to further lower the grade of remaining chloride. In the washing step, water is added to the alkaline leaching residue to form a slurry, and then washing is continued until the pH ranges from 2.5 to 3.5 and is preferably about 3, so that a bismuth component in a neutralized precipitate improves in dispersibility, facilitating the leaching into sulfuric acid.

In the sulfuric acid leaching step, a two-stage leaching process is preferably performed with varied sulfuric acid concentrations. Specifically, first, a primary treatment is preferably performed, by which low-concentration sulfuric acid is contacted to leach a leaching residue for separation into a primary leachate and a primary leaching residue, and then a secondary treatment is preferably performed, by which high-concentration sulfuric acid is contacted with the primary leaching residue for separation into a secondary leachate and a secondary leaching residue.

Furthermore, the above secondary leachate is preferably fed to the above cooling step. Such a two-stage leaching process is performed so that the solubility of bismuth is increased to facilitate concentrating.

In the present invention, the term "low-concentration sulfuric acid" refers to a sulfuric acid solution having a weak acid concentration, wherein the pH ranges from 0 to 3.5 and is preferably around pH 3. The term "high-concentration sulfuric acid" as used herein refers to a sulfuric acid solution having a strong acid concentration wherein the pH is less than 0, and specific examples of such concentration is 7 mol/l or more, and is preferably about 10 mol/l. Upon leaching with the above high-concentration sulfuric acid, the slurry temperature may range from 30°C to 90°C.

Specifically, sulfuric acid is added to the above alkaline leaching residue, so as to form a slurry with a pH adjusted to range from 0 to 3.5, followed by leaching of copper or iron. In the sulfuric acid leaching step with a pH of 0 to 1, for example, the distribution (leaching rate) of copper from that contained in the alkaline leaching residue into a sulfuric acid leachate is preferably 50% or more. Distribution of less than 50% results in insufficient removal of copper, which adversely affects the copper grade of the bismuth product.

Moreover, the distribution (leaching rate) of bismuth from that contained in an alkaline leaching residue into a sulfuric acid leachate should be 2% or less. Distribution higher than 2% makes the loss of bismuth unignorable throughout the treatment.

### 4) Cooling step

The sulfuric acid leachate obtained in the above sulfuric acid leaching step is cooled, to crystalize and obtain crystals of bismuth sulfate. The cooling step utilizes differences in solubility. In general, the lower the temperature, the lower the solubility, meaning that the relevant matter cannot be completely dissolved in the solution. Hence, cooling is performed so that crystals of bismuth sulfate can be obtained.

A cooling method can be performed, for example, by providing a jacket outside a reaction tank (cooling tank) filled with the above sulfuric acid leachate or installing a coiled pipe within a reaction tank, and causing a coolant such as water to run through the jacket or coiled pipe while stirring the solution within the reaction tank. Note that upon cooling, crystals of bismuth sulfate obtained in advance may be added as a seed to a leachate.

Cooling is preferably performed up to a low temperature, and in view of a cost required for cooling and efficiency, is also preferably performed up to about room temperature that is lower than 30°C. The time required for cooling is preferably about 1 hour.

### 5) Bismuth oxidation step

Alkali is added to the crystals of bismuth sulfate obtained in the above cooling step. When alkali is added, anything other than bismuth is dissolved, and thus bismuth oxide can be obtained.

Specifically, for example, a sodium hydroxide solution with a concentration of about 1 mol/l to 2 mol/l is mixed with the above crystals of bismuth sulfate so that the slurry concentration is about 25 g/l, the mixture is stirred for about 1 hour while maintaining the temperature at about 60°C, bismuth hydroxide (Bi(OH)₃) is obtained and then dried, and thus bismuth oxide (Bi₂O₃) is obtained.

### 6) Electrolysis step

An acid solution is added to and dissolved in the bismuth oxide obtained in the above bismuth oxidation step. Addition of the acid solution in this manner causes bismuth to be dissolved in the form of ion. When the thus obtained solution is subjected to electrowinning, that is, an electrode is placed in the solution to apply a current, bismuth ions receive electrons and a simple substance is electrodeposited as metal bismuth on the cathode.

As an acid solution to be used for electrolysis, hydrochloric acid or the like can also be used, and a hydrosilicofluoric acid solution is preferable because it has sufficiently high solubility for bismuth, so that bismuth concentrations convenient for electrolysis can be ensured, and its separability with impurities coexisting therewith is high. With the use of an electrolytic bath in which a solution containing hydrosilicofluoric acid is used, metal bismuth sufficiently separated from impurities can be obtained from an electrolytic solution containing bismuth in the form of bismuth silicofluoride.

Regarding specific electrolysis conditions for obtaining metal bismuth, for example, bismuth oxide is dissolved using a hydrosilicofluoric acid solution with a concentration ranging from 300 g/l to 350 g/l to obtain an electrolysis starting solution having a bismuth concentration ranging from 80 g/l to 100 g/l, the electrolysis starting solution is fed to an electrolytic cell using Hastelloy as a cathode and carbon as an anode, an electrical current is applied at cathode current density of 80 A/m² to 120 A/m² while maintaining the solution temperature at 40°C to 50°C and preferably 50°C or lower, and thus metal bismuth can be electrodeposited on the cathode. The electrical current density of higher than 200 A/m² results in rough electrodeposition surface, on which particulate deposits tend to be formed and causes an inclusion of an electrolytic solution, for example, and thus is not preferred.

Electrolysis is completed at the time point when the bismuth concentration in the electrolytic solution decreases to range from about 20 g/l to 30 g/l, for example. This can prevent the surface condition, on which bismuth is deposited, from becoming worse, and bismuth metal with a smooth surface, which is free from effects such as an inclusion of an electrolytic solution and the like, can be obtained, and thus is preferable.

In addition, it is preferred that bismuth metal is added to and immersed in an electrolysis starting solution for cementation reaction whereby silver ions contained in the electrolysis starting solution are deposited on the bismuth metal, and then the post-cementation solution is subjected to electrolysis, so as to be able to lower the silver grade in the bismuth metal. Cementation reaction is preferably performed by adding bismuth metal in such a manner that the oxidation-reduction potential (ORP) of an electrolysis starting solution decreases to range from 400 mV to 518 mV or lower with respect to that of a silver·silver chloride electrode as a reference electrode.

Moreover, after completion of electrolysis, the cathode is removed, electrodeposited bismuth is scraped off, washed with water, and then placed and melted in a furnace at a temperature about 300°C, which is slightly higher than the melting point (271°C) of bismuth under an inert atmosphere, impurities and oxides are removed, and thus bismuth metal in the form of ingot or the like can be obtained.

### Examples

### (Example 1)

With the use of a known copper electrolytic refining method, which involves introducing and melting a copper concentrate in a furnace at a high temperature, separating impurities, casting the thus obtained blister copper so as to obtain an anode, immersing the anode in an electrolytic cell filled with a sulfuric acid solution, applying an electrical current between the anode and a cathode made of copper or stainless steel, which was immersed facing the anode, and then electrodepositing the electrolytic copper on the cathode surface, a copper electrolytic slime containing noble metals such as gold and silver was obtained, an oxidizing agent such as a chlorine gas was acted on the copper electrolytic slime using a known method, and thus an acid solution containing noble metals leached from the copper electrolytic slime was prepared.

Next, sodium hydroxide was added to the acid solution at normal temperature to adjust the pH to 2.6, and thus a slurry was obtained. Subsequently, the slurry was separated by solid-liquid separation into a neutralized precipitate and a neutralized filtrate (neutralization step) using Nutsche, a filtering flask, and 5C filter paper. The proportions of components bismuth, iron, lead, and arsenic distributed in the neutralized precipitate relative to the components contained in the original solution were found to be 90% (bismuth), 40% (iron), 40% (lead), and 40% (arsenic). More than half of the amount of each component other than bismuth could be successfully separated.

### (Example 2)

An acid solution prepared by leaching noble metals from a copper electrolytic slime containing the same noble metals as those of Example 1 above was used, a sodium hydroxide solution was added to adjust the pH to 2.6, and thus a neutralized precipitate and a neutralized filtrate were obtained by the same method as in Example 1 (neutralization step).

Next, sodium hydroxide at a concentration of 2 mol/l was added to the neutralized precipitate for leaching, and then an alkaline leaching residue was obtained (alkaline leaching step). Low-concentration sulfuric acid was further added to the thus obtained alkaline leaching residue so as to adjust the slurry concentration at 100 g/l, followed by 1 hour of stirring, so that a sulfuric acid leachate was obtained (sulfuric acid leaching step). The pH of the slurry after addition of sulfuric acid was adjusted to 0.8.

The rate of leaching copper into the sulfuric acid leachate was 53%. On the other hand, the rate of leaching bismuth could be suppressed to be 0.7%, so as to attain the purpose.

Sulfuric acid at a concentration of 10 mol/L was added to the thus obtained residue to form a slurry, and the temperature was maintained at 60°C to leach Bi in the residue.

After separation of the residue, the leachate was cooled to room temperature, and then crystals of bismuth sulfate were obtained (cooling step). The thus obtained crystals were added to a caustic soda solution with pH 14, and then the solution was stirred, so that crystals of bismuth oxide were obtained. The thus obtained crystals were dissolved in a hydrosilicofluoric acid solution with a concentration of 336 g/l to adjust the bismuth concentration at 100 g/l. Separately prepared bismuth metal was immersed in this solution, cementation reaction was performed for desilverization so that the silver concentration in the solution decreased from 13 mg/l to the analytical lower limit of less than 5 mg/l, and then the desilverized solution was designated as an electrolysis starting solution (bismuth oxidation step).

Next, the electrolysis starting solution was placed in an electrolytic cell, and then the solution temperature was maintained at 45°C to 50°C. A cathode made of Hastelloy and an anode made of carbon were arranged in the electrolytic cell, so that the face-to-face distance was 50 mm. Next, an electrical current was applied at cathode electrical current density of 100A/m², while circulating the electrolytic solution discharged from the electrolytic cell by re-feeding the same to the electrolytic cell using a pump (electrolysis step). The bismuth concentration of the electrolytic solution discharged from the electrolytic cell was analyzed, and when the bismuth concentration decreased to 25 g/l or less, applying an electrical current was stopped.

Subsequently, the cathode was removed, electrodeposited bismuth metal was scraped off from the cathode, and then bismuth metal was washed with water and then dried.

The current efficiency was found to be 99.6% by dividing the amount of the thus obtained bismuth metal by the theoretical amount of electrodeposition calculated from the amount of electrical current applied.

Next, the obtained bismuth metal was analyzed using GDMS (Glow Discharge Mass Spectrometry). As a result, the concentration of a major impurity, silver, was about 70 ppm, which was significantly lower than 1300 ppm when no cementation reaction was carried out, and thus high-purity bismuth metal having a bismuth grade reaching 99.993% was obtained.

In addition, the leachate and the washing solution obtained in the alkaline leaching step were boiled at a temperature of 90°C, crystals of sodium dihydrogen arsenate were obtained, and arsenic could be separated and revered as solid via filtering.

### (Example 3)

The same acid solution as in the above Examples 1 and 2 was used, sodium hydroxide was added to the acid solution at normal temperature to obtain a slurry having pH adjusted to 2.6. Subsequently, solid-liquid separation was performed using the same method as in Examples 1 and 2 for separation into a neutralized precipitate and a neutralized filtrate (neutralization step). The grade of bismuth contained in the neutralized precipitate was 19 wt%, and the grade of chloride ion contained in the same was 11 wt%.

Next, a sodium hydroxide solution with a concentration of 2 mol/l was added to the neutralized precipitate, so that the slurry concentration was 100 g/l. The slurry was stirred for 1 hour while maintaining the temperature at 60°C (alkaline leaching step). Next, after completion of stirring, the slurry was subjected to solid-liquid separation. The obtained alkaline leaching residue was washed with water, subjected again to solid-liquid separation, washed, and then analyzed. As a result, compared to the grade of bismuth of 28.1 wt%, and the grade of chloride ion was 0.01 wt%, indicating a significant decrease in chloride.

Next, the above alkaline leaching residue after washing was subjected to the same treatment as in the above Example 2, leaching was performed with sulfuric acid at a concentration of 10 mol/l to obtain a leachate with a bismuth concentration of 3.7 g/l. The leachate was cooled from 60°C to room temperature (25°C) and then subjected to solid-liquid separation, so that a filtrate with a bismuth concentration of 1.0 g/l was obtained. Hence, 73% of bismuth contained in the leachate could be recovered.

### (Example 4)

An alkaline leaching residue was obtained by the same method as in the above Example 3, and then sulfuric acid at a concentration of 8 mol/l was added to the alkaline leaching residue, so as to obtain a leachate into which bismuth was leached. Subsequently, the thus obtained leachate was cooled by the same method as in Example 3, so that 80% of bismuth contained in the leachate could be recovered.

### (Example 5)

An alkaline leaching residue was obtained by the same method as in the above Example 2, and then sulfuric acid and water were added to the alkaline leaching residue in such a manner that the slurry concentration was 100 g/l, so as to adjust the pH to 3.0, followed by 1 hour of stirring. After solid-liquid separation, sulfuric acid at a concentration of 10 mol/l and water were added to the obtained residue to form a slurry, and then leaching was performed for 2 hours while mainlining the temperature at 60°C. The obtained leachate had a bismuth concentration of 3.0 g/l and thus sufficient leaching was confirmed.

### (Comparative example 1)

Except for adjusting the pH to 3.8, the same apparatus, the same acid solution, and the same method as in the above Example 1 were used to perform neutralization. The proportion of bismuth distributed into the neutralized precipitate was as good as 95%, but the proportion of iron distributed was 80%, the same of lead distributed was 60%, and the same of arsenic distributed was 40%, and thus only the precipitate with a bismuth grade of only 52% was obtained.

### (Comparative example 2)

A neutralized precipitate prepared in a manner similar to that in the above Example 2 was subjected to sulfuric acid leaching under the same conditions as in Example 1 without performing alkaline leaching. As a result, the bismuth leaching rate was 60%. The bismuth concentration in the leachate was 4.0 g/l. The residue after leaching was subjected again to sulfuric acid leaching under the same conditions, however, almost no bismuth was leached. Moreover, even when the leachate was cooled, almost no crystals of bismuth sulfate were obtained.

### (Comparative example 3)

A neutralized precipitate prepared in the same manner as in the above Example 2 was treated by the same method as in the above Example 2, except for adjusting the pH to 3.5 using sodium hydroxide, performing alkaline leaching, and then adding the sulfuric acid solution to adjust the pH to 1.2. Bismuth was sufficiently distributed into the solution such that the distribution thereof was 1.5%, however, distribution of copper (leaching rate) was as insufficient as 45%.

### (Comparative example 4)

A neutralized precipitate prepared in the same manner as in the above Example 2 was treated by the same method as in Example 2, except for adjusting the pH to 3.5 using sodium hydroxide, performing alkaline leaching, and then using high-concentration sulfuric acid to adjust the pH to less than 0. As a result, the elution of copper into the solution was as sufficient as 55%, however, bismuth was leached as high as 3%, and the target bismuth leaching rate could not be achieved.

### (Reference example 1)

An alkaline leaching residue was obtained by the same method as in the above Example 4, and then sulfuric acid at a concentration of 6 mol/l was added to the alkaline leaching residue, so that a leachate into which bismuth was leached was obtained. Subsequently, the obtained leachate was cooled by the same method as in Example 4, so that only 45% of bismuth contained in the leachate was recovered.

### (Reference example 2)

An alkaline leaching residue was obtained by the same method as in the above Example 5, and then sulfuric acid at a concentration of 10 mol/l and water were added to the alkaline leaching residue without pH adjustment, so as to form a slurry. Leaching was performed for 2 hours while maintaining the temperature at 60°C. The bismuth concentration of the obtained leachate was as low as 1.2 g/l, indicating insufficient leaching.

### (Reference example 3)

An alkaline leaching residue was obtained by the same method as in the above Example 5, and then sulfuric acid and water were added to the alkaline leaching residue so that the slurry concentration was 100 g/l and the pH was adjusted to 5, followed by 1 hour of stirring. After solid-liquid separation, sulfuric acid at a concentration of 10 mol/l and water were added to the obtained residue to form a slurry, and then leaching was performed for 2 hours while maintaining the temperature at 60°C. The bismuth concentration of the obtained leachate was as low as 2.5 g/l, indicating insufficient leaching.

### (Reference example 4)

An alkaline leaching residue was obtained by the same method as in the above Example 5, and then sulfuric acid and water were added to the alkaline leaching residue, so that the slurry concentration was 100 g/l and the pH was adjusted to 0, followed by 1 hour of stirring. After solid-liquid separation, sulfuric acid at a concentration of 10 mol/l and water were added to the obtained residue to form a slurry, and then leaching was performed for 2 hours while maintaining the temperature at 60°C. The bismuth concentration of the obtained leachate was as low as 2.5 g/l, indicating insufficient leaching.

### Reference Signs List

1: Neutralization step
2: Alkaline leaching step
3: Sulfuric acid leaching step
4: Cooling step
5: Bismuth oxidation step
6: Electrolysis step

## Claims

1. A method for refining bismuth, comprising, in steps of smelting minerals containing copper, noble metals, bismuth and an impurity to obtain blister copper, subjecting the blister copper to electrolytic refining to recover copper, performing electrolytic refining to generate an electrolytic slime, and then recovering noble metals by a wet method from the electrolytic slime,
subjecting an acid solution generated after recovery of the noble metals to the following steps:
1) a neutralization step of adding alkali to the acid solution to adjust the pH to a range of 2.0 or more and 3.0 or less, and then performing solid-liquid separation to obtain a neutralized filtrate and a neutralized precipitate;
2) an alkaline leaching step of adding alkali to the neutralized precipitate to separate the resultant into an alkali leachate and an alkaline leaching residue;
3) a sulfuric acid leaching step of adding sulfuric acid to the alkaline leaching residue to separate the resultant into a sulfuric acid leachate and a sulfuric acid-leaching residue;
4) a cooling step of cooling the sulfuric acid leachate to obtain crystals of bismuth sulfate;
5) a bismuth oxidation step of adding alkali to the crystals of bismuth sulfate to obtain bismuth oxide; and
6) an electrolysis step of adding an acid solution to the bismuth oxide for dissolution, and then electrowinning the thus obtained solution to obtain metal bismuth.

2. The method for refining bismuth according to claim 1, wherein the impurity is one or more types of copper, iron, lead, arsenic, and tellurium.

3. The method for refining bismuth according to claim 1, comprising a boiling step of heating the alkali leachate obtained in the alkaline leaching step at 90°C or higher, and then cooling the resultant to obtain crystals containing arsenic.

4. The method for refining bismuth according to claim 1, wherein the sulfuric acid leaching step comprises a two-stage leaching process of: first contacting with low-concentration sulfuric acid to leach a leaching residue, so as to separate the resultant into a primary leachate and a primary leaching residue; and then contacting the primary leaching residue with high-concentration sulfuric acid, so as to separate the resultant into a secondary leachate and a secondary leaching residue, and then feeding the thus obtained secondary leachate to the cooling step.

5. The method for refining bismuth according to claim 1, wherein the acid solution to be used in the electrolysis step is a solution containing hydrosilicofluoric acid.

6. The method for refining bismuth according to claim 1, wherein in the alkaline leaching step, alkali to be added to the neutralized precipitate is a sodium hydroxide solution with a concentration of 1 mol/1 or more and 5 mol/1 or less, and
the sodium hydroxide solution is used and mixed with the precipitate for dissolution in such a manner that the slurry concentration is a range of 10g/l or more and 100g/l or less, so as to obtain an alkali leachate and an alkaline leaching residue.

7. The method for refining bismuth according to claim 1, comprising, in the sulfuric acid leaching step, adjusting the pH of the slurry after addition of sulfuric acid to the range of 0 or more and 3.5 or less, and then performing solid-liquid separation, so as to obtain a sulfuric acid leachate and a sulfuric acid-leaching residue.
